# EUROPÄISCHE PATENTSCHRIFT

(11) **EP 0 559 049 B1**
(45) Veröffentlichungstag und Bekanntmachung des Hinweises auf die Patenterteilung: **05.11.1997**
(21) Anmeldenummer: 93102792.4
(22) Anmeldetag: 23.02.1993
(51) Int. Cl.: C08G 8/28, C08G 8/34

(54) **Verfahren zur Herstellung von modifizierten Phenolharzen**
Process for preparing modified phenolic resins
Procédé de préparation de résines phénoliques modifiées

(30) Priorität: 04.03.1992 DE 4206697
(43) Veröffentlichungstag der Anmeldung: 08.09.1993
(73) Patentinhaber: HOECHST AKTIENGESELLSCHAFT, 65926 Frankfurt am Main (DE)
(72) Erfinder: Bender, Albert, Dr., W-6500 Mainz (DE); Dathe, Wolfgang, W-6200 Wiesbaden (DE)

(56) Entgegenhaltungen:
- EP-A- 0 041 838
- EP-A- 0 209 023
- EP-A- 0 361 103
- EP-A- 0 362 727
- WO-A-84/01952

## Beschreibung

Die Erfindung betrifft ein verbessertes Verfahren zur Herstellung von modifizierten Phenolharzen, die vorzugsweise als Bindemittelharze für Druckfarben eingesetzt werden, wobei das während der Herstellung durch Polykondensation entstehende Wasser durch azeotrope Destillation eliminiert wird.

Es ist Stand der Technik, modifizierte Phenolharze als Bindemittelharze für Druckfarben, wie z.B. Farben für den Tief- oder Offsetdruck, zu verwenden. Diese Harze werden durch Polykondensation von Naturharzsäuren und/oder ethylenisch ungesättigten Kohlenwasserstoffharzen mit Phenolen und Aldehyden, die auch als Resole oder Novolake vorliegen können, hergestellt, wobei als weitere Modifizierungsmittel vorzugsweise α, β-ethylenisch ungesättigte Carbonsäuren oder deren Derivate, Veresterungsmittel, Fettsäuren, ethylenisch ungesättigte Monomere, Salzbildner und Katalysatoren mitverwendet werden können.

So werden in EP-A 0 362 727 modifizierte Novolake beschrieben, die auf gegenüber Formaldehyd trifunktionellen Phenolen basieren und als Modifizierungsmittel Terpene und ungesättigte Carbonsäuren oder deren Derivate enthalten. In WO-A 84/01952 wird die Herstellung eines wärmehärtbaren Polyols beschrieben, basierend auf einem Kondensationsprodukt von Phenol und Aldehyden in Gegenwart einer Polyhydroxy-Komponente. In EP-A 0 361 103 werden Kondensationsprodukte von Kolophonium mit einer in para-Stellung alkylsubstituierten aromatischen Mono- oder Dihydroxyverbindung und Formaldehyd unter basischer Katalyse beschrieben, die anschließend mit einer ungesättigten Carbonsäure und danach mit einem ungesättigten aliphatischen Alkohol oder Amin umgesetzt werden.

Man kann daher diese modifizierten Phenolharze auch als Naturharzsäureester, Kohlenwasserstoffharze oder Resinate auffassen, die mit Phenolharzen modifiziert sind.

Die Umsetzung dieser Komponenten kann in bekannter Weise durch Erhitzen in den gewünschten Mengenverhältnissen sowohl im Eintopfverfahren als auch durch aufeinanderfolgendes Zudosieren einzelner Komponenten in das auf Reaktionstemperatur gebrachte Naturharz und/oder ungesättigte Kohlenwasserstoffharz und stufenweises Erwärmen von ca. 80 °C bis auf Temperaturen von 300 °C unter Abdestillieren des Reaktionswassers bis zum Erreichen der gewünschten Eigenschaften erfolgen.

Die Zugabe des Phenolharzes, insbesondere wenn Resole verwendet werden, zur Harzschmelze erfolgt dabei zweckmäßigerweise bei relativ niedrigen Temperaturen; typisch sind etwa 150 bis 180 °C. Bei höheren Zugabetemperaturen können nämlich sonst unkontrollierte Selbstkondensationsreaktionen des Phenolharzes erfolgen, die die Eigenschaften des Endprodukts negativ beeinflussen können. Wird das Resol erst während der Polykondensation aus den Einzelkomponenten Aldehyd und Phenol durch in-situ-Reaktion in der Harzschmelze hergestellt, so sind sogar noch niedrigere Temperaturen von ca. 120 °C bis 160 °C notwendig, um vorzeitiges Abdestillieren der Aldehydkomponente, die unter diesen Reaktionsbedingungen zumeist flüchtig ist, zu vermeiden. Wird im geschlossenen Gefäß, also unter Druck gearbeitet, so sind gleichfalls niedrige Temperaturen zur Begrenzung des Druckanstiegs vorteilhaft. Dies gilt insbesondere für den am häufigsten verwendeten Formaldehyd. Erst danach kann zur Beschleunigung der Polykondensation auf hohe Temperaturen erhitzt werden, wobei zunächst Wasser, das von Kondensationsreaktionen des Resols mit der Harzkomponente herrührt, aus der Mischung abzudestillieren beginnt. Zusätzlich kann dann gegebenenfalls Wasser, das aus Veresterungsreaktionen mit einem bei der Polykondensation verwendeten Polyol oder aus der Reaktion mit einem Salzbildner stammt, hinzukommen. Dieses direkte Abdestillieren kann jedoch zu Problemen führen, die einen störungsfreien Reaktionsablauf, der für die Herstellung im technischen Maßstab unerläßlich ist, erschweren oder gar unmöglich machen. Mit fortschreitendem Kondensationsgrad trennt sich nämlich das Reaktionsmedium in eine organische Harzphase und eine wäßrige Phase auf. Gerade beim Erwärmen auf Temperaturen von ca. 160 bis 220 °C können diese Harzschmelzen, die dann heterogene Gemische darstellen, Zähigkeiten aufweisen, die die Eliminierung des gebildeten Wassers verzögern. Demzufolge reichert sich Wasser in der Schmelze an, das dann beim weiteren Temperaturanstieg und der damit einhergehenden Viskositätserniedrigung des heterogenen Schmelzgemischs aufgrund des Energiestaus und Überhitzung der Phasen schlagartig aus dem Gemisch abdestilliert. Es treten somit gefährliche Siedeverzüge auf, die zum Überschäumen des Kessels oder Auswurf des Kesselinhalts führen können. Deshalb besteht aus Sicherheitsgründen die Notwendigkeit, die Reaktion viel langsamer zu führen, als es aus kinetischen Gründen möglich wäre.

In der Praxis bedeutet das einen erheblichen Zeitverlust bzw. eine wesentlich verringerte Zeit- sowie Raumausbeute, da wegen des auftretenden Schaums, der aus von flüssigem Harz umgebenen Wasser besteht, nur mit verringerter Chargierung gearbeitet werden kann.

Der vorliegenden Erfindung lag somit die Aufgabe zugrunde, unter Überwindung der aufgezeigten Schwierigkeiten und Nachteile einen vorteilhaften Verfahrensweg aufzuzeigen.

Gegenstand der Erfindung ist ein Verfahren zur Herstellung von modifizierten Phenolharzen unter Reaktion von Naturharzsäuren und/oder ethylenisch ungesättigten Kohlenwasserstoffharzen mit Phenolen und Aldehyden, die auch als Resole oder Novolake vorliegen können, sowie gegebenenfalls von α,β-ethylenisch ungesättigten Carbonsäuren oder deren Derivaten, Veresterungsmitteln, Fettsäuren und Katalysatoren, dadurch gekennzeichnet, daß bei einem Druck von 0,15 bis 2 MPa (1,5 bis 20 bar) und einer Temperatur von 220 bis 270 °C der Hauptteil des während der Reaktion gebildeten Wassers in Gegenwart eines inerten organischen Lösemittels kontinuierlich durch azeotrope Destillation entfernt wird.

Die Phenole und Aldehyde können auch separat kondensiert werden. Anstelle von Phenolen und Aldehyden werden dann die dabei erhaltenen Resole oder Novolake bei der Herstellung der modifizierten Phenolharze eingesetzt.

Als Ausgangskomponenten kommen insbesondere folgende Verbindungen infrage:
A) Einkernige oder mehrkernige Phenole, vorzugsweise solche, die gegenüber Oxoverbindungen mehrfachfunktionell sind, insbesondere Phenol, (C₁-C₁₂)-Alkylphenole, Aryl- oder Aralkylphenole, Kresole, 1,3,5-Xylenole, Isopropyl-, p-tert.-Butyl-, Amyl-, Oktyl-, Nonylphenol, Diphenylolpropan, Phenylphenol, Cumylphenol, sowie deren Additionsprodukte aus Phenolen und ethylenisch ungesättigten Monomeren, vorzugsweise α-Methylstyrol, α-Chlor-Styrol, Vinyltoluol, Cyclopentadien,
B) Aldehyde oder Aldehydacetale, vorzugsweise aliphatische (C₁-C₇)-Aldehyde, insbesondere Formaldehyd in seinen verschiedenen monomeren, oligomeren und polymeren Formen, Acetaldehyd, Butyraldehyd, Isobutyraldehyd, ferner Benzaldehyd, Furfural, Glyoxal, sowie aus Komponenten der Substanzgruppe A) und B) hergestellte Phenolresole,
C) Naturharze oder Naturharzsäuren, vorzugsweise Kolophonium, Wurzelharz, Tallharz sowie disproportioniertes oder partiell hydriertes oder dimerisiertes Naturharz beliebiger Provenienz. Häufig werden vorteilhaft Mischungen aus Naturharzen bzw. Naturharzsäuren und α,β-ethylenisch ungesättigten Carbonsäuren oder deren Anhydriden, insbesondere Fumarsäure, Maleinsäure, Maleinsäureanhydrid, Itakonsäure, Zimtsäure, Acrylsäure, Methacrylsäure, oder deren Umsetzungsprodukte, verwendet,
D) Ethylenisch ungesättigte Kohlenwasserstoffharze, vorzugsweise Polymere oder Oligomere aus einfach und/oder mehrfach ethylenisch ungesättigten (C₅-C₉)-Kohlenwasserstoffen, insbesondere aus der Gruppe Isopren, Cyclopentadien, Inden, Cumaron, Styrol, die auch als Copolymerisate mit den Verbindungen der Substanzgruppe C) vorliegen können,
E) Veresterungsmittel zur Veresterung der Umsetzungsprodukte aus Phenolharzen und Verbindungen der Substanzgruppen C) und/oder D), vorzugsweise polyfunktionelle Alkohole, insbesondere bifunktionelle, z.B. Glykole, oder trifunktionelle, z.B. Trimethyloläthan, Trimethylolpropan, Glycerin, oder tetrafunktionelle, z.B. Pentaerythrit, oder pentafunktionelle, z.B. dimerisiertes Trimethylolpropan, oder hexafunktionelle Alkohole, z.B. dimerisierter Pentaerythrit,
F) Kondensationskatalysatoren bzw. Salzbildner, u.a. für die Resolbildung aus Phenolen und Aldehyden oder Aldehydacetalen sowie für die Veresterungsreaktionen bzw. Resinatbildung, vorzugsweise Oxide, Hydroxide, Carbonate, Acetate von Metallen, insbesondere von Calcium, Magnesium, Zink, ferner Amine, z.B. Triethylamin,
G) Fettsäuren zur Harzmodifizierung, vorzugsweise tierische, pflanzliche oder durch Raffination gewonnene Fettsäuren, ferner Fettverbindungen, z.B. Fette und Fettsäureglycerinester, insbesondere in Form von vegetabilischen oder tierischen Ölen, z.B. Tallöl, Baumwollsaatöl, Sojaöl, Leinöl, Holzöl, Fischöl.

Als inerte organische Lösemittel, die mit Wasser ein Azeotrop bilden (Schleppmittel) kommen vorzugsweise gesättigte aliphatische oder aromatische Kohlenwasserstoffe infrage, deren Siedetemperaturen unter Normaldruck vorzugsweise zwischen 100 und 250 °C liegen. Noch höhersiedende Schleppmittel haben den Nachteil, nur langsam aus den hochviskosen Schmelzen im bevorzugten Reaktionstemperaturbereich abzudestillieren und müssen bei Beendigung der Reaktion gegebenenfalls bei reduziertem Druck im Vakuum bei langen Destillationszeiten entfernt werden; dabei können sich die Produkteigenschaften aufgrund weiterer Kondensationsreaktionen in unerwünschter Weise verändern. Deshalb kommen als Schleppmittel vorzugsweise gesättigte aliphatische oder aromatische Kohlenwasserstoffe infrage, deren Siedetemperaturen unter Normaldruck insbesondere zwischen 100 und 200 °C liegen, da sie nämlich bei den herrschenden Reaktionstemperaturen von ca. 250 °C problemlos aus den Schmelzen abdestillieren. Um zu verhindern, daß diese Schleppmittel zu früh aus den Gemischen durch Verdampfen entweichen, und um die hohe Reaktionstemperatur aufrechterhalten zu können, muß dann allerdings während der Reaktion die Azeotropdestillation unter Druck durchgeführt werden, da sich dann bekanntlich der Siedepunkt erhöht. Diese Ausführungsform ist deshalb besonders vorteilhaft und daher bevorzugt. An bevorzugten Alkanen sind insbesondere Hexan, Dekan, Gemische von aliphatischen Kohlenwasserstoffen, wie sie z.B. in Benzin oder in entsprechenden Mineralölfraktionen vorliegen, sowie Toluol oder Xylol zu nennen. Die Menge an Lösemittel beträgt im allgemeinen bis zu 20 Gew.-%, vorzugsweise 5 Gew.-%, bezogen auf den Feststoffgehalt des Reaktionsgemisches.

Die Durchführung des Verfahrens erfolgt in einem Reaktor, z.B. einem üblichen Druckkessel, der mit Rührer, Heizung, Thermostat, Zulaufvorrichtung, Rückflußkühler und Wasserabscheider ausgestattet ist. Beispielsweise wird zur Herstellung eines phenolharzmodifizierten Naturharzsäureesters so verfahren, daß zum geschmolzenen Naturharz bei 80 bis 220 °C Veresterungsmittel und Kondensationskatalysator zugegeben werden, sowie die benötigte Menge Xylol, um eine kontinuierliche Umlaufdestillation durchführen zu können. Dann tropft man das Resol zu, wobei bereits gebildetes Wasser am Xylolumlauf aus der Reaktionsmischung entfernt wird. Die azeotrope Abdestillation des Wassers in dieser vorgeschalteten, drucklosen Stufe dauert etwa 1 bis 2 Stunden. Dann erfolgt das eigentliche erfindungsgemäße Verfahren. Hierzu wird die Apparatur druckdicht verschlossen und die Heizung auf 220 bis 270 °C geregelt, wobei ständig Xylol im Umlauf destilliert und gebildetes Wasser sofort aus der Mischung entfernt wird, so daß diese homogen bleibt. Da das ständig verdampfende Xylol/Wassergemisch der Harzschmelze Energie entzieht und diese daher abkühlt, was ein Aufheizen auf hohe Temperaturen verhindern würde, wird nun mittels eines Inertgases, wie z.B. Stickstoff, dem System Druck aufgepresst, wodurch der Siedepunkt des Azeotrops und des Schleppmittels erhöht wird. Der Druck beträgt 0,1 bis 2 MPa (1 bis 20 bar), vorzugsweise 0,15 bis 1 MPa (1,5 bis 10 bar). Auf diese Weise läßt sich beispielsweise bei einem Druck von 6 bar eine Siedetemperatur von ca. 220 °C einstellen. Diese azeotrope Abdestillation des Wassers unter Druck erfolgt bei Veresterungsreaktionen normalerweise über einen Zeitraum von ca. 10 bis 15 Stunden.

Wird dann, nachdem der Hauptteil des Wassers abdestilliert ist, auf Normaldruck entspannt, so destilliert Xylol ab, und die Reaktion kann nach den gewünschten Reaktionsbedingungen glatt zu Ende geführt werden.

Es versteht sich, daß diese allgemeine Verfahrensweise in Abhängigkeit von den jeweiligen Ausgangsverbindungen variiert und modifiziert werden muß, wozu es lediglich weniger, orientierender Versuche bedarf. Für den Fall, daß die Resole oder Novolake erst in-situ aus Phenolen und Aldehyden gebildet werden, kann es beispielsweise sinnvoll sein, in der ersten Stufe nicht unter Normaldruck zu arbeiten, sondern das Druckgefäß geschlossen zu halten und bei dem Druck zu arbeiten, der sich dann bei der gewählten Reaktionstemperatur einstellt.

Im Gegensatz zu den bekannten Verfahren wird das in das erfindungsgemäße Verfahren eingebrachte bzw. im Verfahrensverlauf entstehende Wasser kontinuierlich abgeführt und die Kondensationsreaktion findet in einer homogenen Phase statt. Dadurch entfällt einer der Gründe für die Entstehung eines Energiestaus. Die Existenz einer homogenen Phase, deren Beweglichkeit zusätzlich durch höhere Temperaturen und die Anwesenheit von Lösungsmitteln erhöht ist, erleichtert die Umsetzung wesentlich und führt somit zu höheren Zeitausbeuten. Auch kann durch den kontinuierlichen Austrag des Reaktionswassers die Raumausbeute erhöht werden. Sie steigt von 50 bis 70 % bei bekannten Verfahren erfindungsgemäß auf 60 bis 80 %. Das erfindungsgemäße Verfahren ist damit nicht nur durch eine Verbesserung der Zeitausbeute, sondern auch durch eine Verbesserung der Raumausbeute gekennzeichnet.

Die nach dem erfindungsgemäßen Verfahren hergestellten modifizierten Phenolharze werden in der gleichen Weise und zu den gleichen Zwecken verwendet, wie die nach den herkömmlichen Verfahren erhaltenen Harze. Durch die vielseitige Variationsmöglichkeit des erfindungsgemäßen Verfahrens ist es jedoch möglich, die Eigenschaften der Druckfarben-Bindemittelharze vielfältig zu variieren und den jeweiligen Erfordernissen noch besser anzupassen. Insbesondere ist es jedoch nach dem erfindungsgemäßen Verfahren möglich, die bisher nach bekannten Verfahren hergestellten Druckfarben-Bindemittelharze einfacher, sicherer und mit gleichbleibender Qualität bei sehr guter Reproduzierbarkeit herzustellen. Durch das neue Verfahren sind sogar Druckfarben-Bindemittelharze zugänglich geworden, die nach herkömmlichen Methoden nicht produzierbar sind.

Die Verwendung der nach dem erfindungsgemäßen Verfahren hergestellten Harze liegt vorzugsweise bei der Herstellung von Druckfarben. Es ist jedoch möglich, diese auf anderen, für diese Produktklasse bekannten Gebieten einzusetzen, also z.B. als Verstärkerharze für Gummi und Elastomere, als Klebrigmacher für Kautschuk, als Schmelzkleber, als Bindemittel für Reibbeläge, als Imprägniermittel für organische und/oder anorganische Fasern sowie als Bindemittel in Überzügen, Beschichtungen und Lacken.

Die Erfindung wird durch die nachstehenden Beispiele erläutert.

### Vergleichsbeispiel 1

### Herstellung eines phenolharzmodifizierten Naturharzsäureesters nach bekanntem Verfahren

In einem mit Wärmeträgeröl beheizten 2ltr.-Druckgefäß mit Rührwerk, Thermometer und Einfüllrohr werden unter N₂-Atmosphäre 527 g handelsübliches Kolophonium, das auch als Naturharz oder Naturharzsäure bezeichnet wird, geschmolzen, und der 160 °C heißen Harzschmelze 25,3 g Maleinsäureanhydrid zudosiert, wobei eine exotherme Reaktion einsetzt, nach deren Abklingen das Reaktionsgemisch noch 1 Stunde bei 160 °C gehalten wird. Anschließend werden der Mischung bei 160 °C 276 g Nonylphenol, 68 g Pentaerythrit und 5 g Magnesiumoxid zugesetzt, die Temperatur auf 110 °C erniedrigt, 78 g Paraformaldehyd zugegeben, das Gefäß druckdicht verschlossen und die Mischung 1 Stunde bei 110 °C gerührt. Danach wird die Temperatur innerhalb von 20 Minuten auf 130 °C erhöht, wobei das Einsetzen der Phenolresolbildung unter Wasserabspaltung beginnt. Die Reaktionstemperatur wird weitere 2 Stunden bei 130 °C gehalten, das Gefäß vorsichtig auf Normaldruck entspannt, wobei das Wasser über einen aufgesetzten Kühler aus der heterogenen Schmelze abdestilliert. Nachdem diese Destillation zum Stillstand gekommen ist, wird die Temperatur auf 265 °C gesteigert, wobei die weitere Kondensation unter Wasserabspaltung einsetzt. Das Hochheizen kann allerdings nur sehr langsam erfolgen, da das gebildete zähe heterogene Harz-Wasser-Gemisch im Reaktionsgefäß nach oben steigt und bei zu starker Energiezufuhr aus dem Reaktionsgefäß schäumt. Die Reaktion muß deshalb in dieser Phase sorgfältig überwacht werden. Nach ca. 4 Stunden sind 265 °C erreicht. Bei dieser Temperatur wird dann bis zum Erreichen einer Säurezahl von unter 25 mg KOH/g Harz kondensiert. Zur Entfernung flüchtiger Anteile wird schließlich noch 5 Minuten bei 10 kPa (100 mbar) evakuiert und die Reaktion beendet. Die Reaktionszeit beträgt ca. 18 Stunden. Eine 40 proz. Lösung des Harzes in einem hochsiedenden Mineralöl mit dem Siedebereich 240-270 °C und dem Anilinpunkt von 72 °C weist bei 23 °C eine Viskosität zwischen 70 und 120 dPa*s auf.

### Vergleichsbeispiel 2

Es wird gearbeitet wie in Vergleichsbeispiel 1 mit der Abänderung, daß zur Erhöhung der Kesselausbeute die Einwaage der Reaktanden um jeweils 50 % erhöht wird. Die Reaktion läßt sich dann allerdings wegen des auftretenden Schaumes, der aus dem Reaktionsgefäß austritt, nicht mehr in der geschilderten Weise durchführen.

### Beispiel 1 (erfindungsgemäß)

### Herstellung eines Bindemittelharzes mit den Reaktanden des Vergleichsbeispiels 1 und der Einwaage des Vergleichsbeispiels 2, aber höherer Raum-Zeit-Ausbeute

In einem mit Wärmeträgeröl beheizten 2ltr.-Druckgefäß mit Rührwerk, Thermometer und Einfüllrohr werden unter N₂-Atmosphäre 790 g handelsübliches Kolophonium geschmolzen und der 160 °C heißen Harzschmelze 38 g Maleinsäureanhydrid zudosiert, wobei eine exotherme Reaktion einsetzt, nach deren Abklingen das Reaktionsgemisch noch 1 Stunde bei 160 °C gehalten wird. Anschließend werden der Mischung bei 160 °C 414 g Nonylphenol, 102 g Pentaerythrit und 7,5 g Magnesiumoxid zugesetzt, die Temperatur auf 110 °C erniedrigt, 117 g Paraformaldehyd und 50 ml Xylol zugegeben, das Gefäß druckdicht verschlossen und die Mischung 1 Stunde bei 110 °C gerührt. Danach wird die Temperatur innerhalb von 20 Minuten auf 130 °C erhöht, wobei das Einsetzen der Phenolresolbildung unter Wasserabspaltung beginnt. Die Reaktionstemperatur wird weitere 2 Stunden bei 130 °C gehalten und danach das Gefäß vorsichtig in einen mit Xylol beschickten angeschlossenen Wasserabscheider mit Vorlage, die das gesamte während der Reaktion gebildete Wasser aufnehmen kann, entspannt, wobei ein azeotropes Gemisch von Wasser und Xylol abdestilliert. Die Temperatur der Heizung des Druckgefäßes wird nun auf 265 °C geregelt. Die Guttemperatur erhöht sich dann bis auf ca. 180 °C, um dann wegen des verdampfenden Azeotrops und des umlaufenden Xylols nicht weiter anzusteigen. Die Apparatur wird nun druckdicht verschlossen und mit Stickstoff ein Inertdruck von 0,2 MPa (2 bar) eingestellt. Daraufhin beginnt sich das Reaktionsgut durch den nun höheren Siedepunkt der flüchtigen Stoffe aufzuheizen, wobei weiteres gebildetes Wasser sofort und ständig aus der niedrigviskosen Schmelze durch das Umlaufmittel eliminiert wird. Nachdem ohne Schwierigkeiten innerhalb von ca. 1 Stunde eine Guttemperatur von 230 °C erreicht ist, wobei sich ein Druck von 0,5 MPa (5 bar) einstellt, wird die Umlaufdestillation unterbrochen und langsam auf Normaldruck entspannt. Dabei beginnt das Xylol abzudestillieren, während sich die Guttemperatur innerhalb von ca. 0,5 Stunden auf 265 °C erhöht. Bei dieser Temperatur wird dann bis zum Erreichen einer Säurezahl von unter 25 mg KOH/g Harz kondensiert. Zur Entfernung flüchtiger Anteile wird schließlich noch 5 Minuten bei 10 KPa (100 mbar) evakuiert und die Reaktion beendet. Die Reaktionszeit beträgt ca. 15 Stunden. Eine 40 proz. Lösung des Harzes in einem hochsiedenden Mineralöl mit dem Siedebereich 240-270 °C weist bei 23 °C eine Viskosität zwischen 70 und 120 dPa∗s auf.

### Vergleichsbeispiel 3

### Versuch der Herstellung eines phenolharzmodifizierten Kohlenwasserstoffharzes nach bekannten Verfahren

In einem mit Wärmeträgeröl beheizten 2ltr.-Druckgefäß mit Rührwerk, Thermometer und Einfüllrohr werden unter N₂-Atmosphäre 362 g eines handelsüblichen Cyclopentadienharzes und 225 g Kolophonium geschmolzen und der 160 °C heißen Harzschmelze 320 g eines Resoles (hergestellt nach bekannten Methoden aus 652 g p-t-Butylphenol, 123 g 37 % Formaldehyd, 242 g Paraformaldehyd und 13 g 33 % Natronlauge; Viskosität/23 °C 340-370 mPa∗s, Formaldehydgehalt 6,5-7,5 %) innerhalb einer Stunde zudosiert. Dabei wird entstehendes Wasser über einen absteigenden Kühler abdestilliert. Nachdem diese Destillation zum Stillstand gekommen ist, wird die Temperatur auf 255 °C gesteigert, wobei die weitere Wasserabspaltung einsetzt. Das Hochheizen kann allerdings nur sehr langsam erfolgen, da das gebildete zähe heterogene Harz-Wasser-Gemisch im Reaktionsgefäß nach oben steigt. Die Reaktion ist schließlich nicht mehr kontrollierbar, da die Harzschmelze bei einer Guttemperatur von ca. 190 °C schlagartig aus dem Gefäß schäumt.

### Beispiel 2

### Herstellung eines phenolharzmodifizierten Kohlenwasserstoffharzes, das als Bindemittelharz für Offset- oder Tiefdruckfarben eingesetzt werden kann, wobei die Rezeptur des Vergleichsbeispiels 3 verwendet wird.

In einem mit Wärmeträgeröl beheizten 2ltr.-Druckgefäß mit Rührwerk, Thermometer und Einfüllrohr werden unter N₂-Atmosphäre 362 g eines handelsüblichen Cyclopentadienharzes und 225 g Kolophonium geschmolzen und der 160 °C heißen Harzschmelze 320 g eines Resoles (hergestellt nach bekannten Methoden aus 652 g p-t-Butylphenol, 123 g 37 % Formaldehyd, 242 g Paraformaldehyd und 13 g 33 % Natronlauge; Viskosität/23 °C 340-370 mPa∗s, Formaldehydgehalt 6,5-7,5 %) innerhalb einer Stunde zudosiert. Dabei wird entstehendes Wasser über einen angeschlossenen Wasserabscheider mit Vorlage, die das gesamte während der Reaktion gebildete Wasser aufnehmen kann, mit Xylol als Umlaufmittel als azeotropes Gemisch abdestilliert. Die Temperatur der Heizung des Druckgefäßes wird nun auf 255 °C geregelt. Die Guttemperatur erhöht sich dann bis auf ca. 180 °C, um dann wegen des verdampfenden Azeotrops und des umlaufenden Xylols nicht weiter anzusteigen. Die Apparatur wird nun druckdicht verschlossen und mit Stickstoff ein Inertdruck von 0,2 MPa (2 bar) eingestellt. Daraufhin beginnt sich durch den nun höheren Siedepunkt der flüchtigen Stoffe das Reaktionsgut aufzuheizen, wobei weiteres gebildetes Wasser sofort und ständig aus der niedrigviskosen Schmelze durch das Umlaufmittel eliminiert wird. Nachdem ohne Schwierigkeiten innerhalb von ca. 3 Stunden eine Guttemperatur von 255 °C erreicht ist, wobei sich ein Druck von bis zu 0,8 MPa (8 bar) einstellen kann, wird die Umlaufdestillation unterbrochen und langsam auf Normaldruck entspannt. Dabei beginnt das Xylol abzudestillieren. Es wird dann bis zum Erreichen einer Säurezahl von unter 35 mg KOH/g Harz kondensiert. Zur Entfernung flüchtiger Anteile wird schließlich noch 5 Minuten bei 10 KPa (100 mbar) evakuiert und die Reaktion beendet. Die Reaktionszeit beträgt ca. 12 Stunden. Eine 50 proz. Lösung des Harzes in Toluol weist bei 23 °C eine Viskosität zwischen 120-160 mPa∗s auf.

### Beispiel 3

### Herstellung eines phenolharzmodifizierten Resinats als Bindemittelharz für den Illustrationstiefdruck

In einem mit Wärmeträgeröl beheizten 2ltr.-Druckgefäß mit Rührwerk, Thermometer und Einfüllrohr werden unter N₂-Atmosphäre 1350 g eines handelsüblichen dimerisierten Tallharzes geschmolzen und der 160 °C heißen Harzschmelze 13 g Maleinsäureanhydrid zudosiert. Nachdem man eine Stunde bei 160 °C nachgerührt hat, werden 26 g eines Resoles (hergestellt nach bekannten Verfahren aus 590 g Phenol, 103 g 37 % Formaldehyd, 271 g Paraformaldehyd und 37 g 33 % Natronlauge; Viskosität/23 °C 250-350 mPa∗s, Formaldehydgehalt 6,5-7,5 %) innerhalb einer halben Stunde, sowie 108 g Calciumhydroxid, das in 200 g Xylol suspendiert ist, innerhalb einer weiteren halben Stunde zudosiert. Dabei wird entstehendes Wasser über einen angeschlossenen Wasserabscheider mit Vorlage, die das gesamte während der Reaktion gebildete Wasser aufnehmen kann, mit Xylol als Umlaufmittel als azeotropes Gemisch abdestilliert. Die Temperatur der Heizung des Druckgefäßes wird nun auf 250 °C geregelt. Die Guttemperatur des sehr zähen Gemischs erhöht sich dann bis auf ca. 180 °C, um dann wegen des verdampfenden Azeotrops und des umlaufenden Xylols nicht mehr weiter anzusteigen. Die Apparatur wird nun druckdicht verschlossen und mit Stickstoff ein Inertdruck von 0,2 MPa (2 bar) eingestellt. Daraufhin beginnt sich durch den nun höheren Siedepunkt der flüchtigen Stoffe das Reaktionsgut aufzuheizen, wobei weiteres gebildetes Wasser sofort und ständig aus der jetzt niedrigviskosen Schmelze durch das Umlaufmittel eliminiert wird. Nachdem ohne Schwierigkeiten innerhalb von ca. 1 Stunde eine Guttemperatur von 220 °C erreicht ist, wobei sich ein Druck von 0,4 MPa (4 bar) einstellt, wird die Umlaufdestillation unterbrochen und langsam auf Normaldruck entspannt. Dabei beginnt das Xylol abzudestillieren. Es wird dann bis zum Erreichen einer Säurezahl von unter 40 mg KOH/g Harz kondensiert. Zur Entfernung flüchtiger Anteile wird schließlich noch 5 Minuten bei 10 KPa (100 mbar) evakuiert und die Reaktion beendet. Die Reaktionszeit beträgt ca. 12 Stunden. Eine 40 proz. Lösung des Harzes in Toluol weist bei 23 °C eine Viskosität zwischen 200-400 mPa∗s auf.

## Patentansprüche

1. Verfahren zur Herstellung von modifizierten Phenolharzen unter Reaktion von Naturharzsäuren und/oder ethylenisch ungesättigten Kohlenwasserstoffharzen mit Phenolen und Aldehyden, die auch als Resole oder Novolake vorliegen können, sowie gegebenenfalls von α,β-ethylenisch ungesättigten Carbonsäuren oder deren Derivaten, Veresterungsmitteln, Fettsäuren und Katalysatoren, dadurch gekennzeichnet, daß bei einem Druck von 0,15 bis 2 MPa (1,5 bis 20 bar) und einer Temperatur von 220 bis 270 °C der Hauptteil des während der Reaktion gebildeten Wassers in Gegenwart eines inerten organischen Lösemittels kontinuierlich durch azeotrope Destillation entfernt wird.

2. Verfahren nach Anspruch 1, dadurch gekennzeichnet, daß man zunächst das Wasser unter Normaldruck azeotrop abdestilliert.

## Claims

1. A process for the preparation of modified phenolic resins by reaction of natural resin acids and/or ethylenically unsaturated hydrocarbon resins with phenols and aldehydes, which may also be present as resols or novolaks, and, if appropriate, of α,β-ethylenically unsaturated carboxylic acids or derivatives thereof, esterifying agents, fatty acids and catalysts, characterized in that the predominant portion of the water formed during the reaction is removed continuously by azeotropic distillation in the presence of an inert organic solvent, under a pressure of 0.15 to 2 Mpa (1.5 to 20 bar) and at a temperature of 220 to 270 °C.

2. The process as claimed in claim 1, characterized in that the water is first distilled off azeotropically under normal pressure.

## Revendications

1. Procédé pour la préparation de résines phénoliques modifiées en faisant réagir des résines naturelles et/ou des résines hydrocarbonées à insaturation éthylénique avec des phénols et des aldéhydes qui peuvent se présenter aussi comme résols ou novolaques, ainsi qu'éventuellement des acides carboxyliques à insaturation éthylénique en α,β ou leurs dérivés, des additifs d'estérification, des acides gras et des catalyseurs, caractérisé en ce que l'on élimine à une pression de 0,15 à 2 MPa (1,5 à 20 bar) et une température de 220 à 270°C, la partie principale de l'eau formée au cours de la réaction, en présence d'un solvant organique inerte, en continu, par distillation azéotropique.

2. Procédé selon la revendication 1, caractérisé en ce que l'on sépare d'abord l'eau par distillation azéotropique à la pression normale.
